# EUROPEAN PATENT APPLICATION

(11) **EP 3 222 598 A1**
(43) Date of publication of application: **27.09.2017**
(21) Application number: 17158689.4
(22) Date of filing: 01.03.2017
(51) Int. Cl.: C04B 20/12

(54) **SECONDARY ALUMINIUM OXIDE COMPOSITION WITH REDUCED AMMONIA EMISSION**

(30) Priority: 21.03.2016 EP 16161474
(71) Applicant: Ballon, Oliver, 40721 Hilden (DE)
(72) Inventor: Ballon, Oliver, 40721 Hilden (DE)
(74) Representative: Michalski Hüttermann & Partner Patentanwälte mbB

(57) **Abstract**

The invention relates to a composition comprising aluminium oxide, a hydrophobic substance and a fine particulate substance, a method for its production and its use as a starting material in a process which employs an aluminium oxide-containing starting material. More specifically, the composition comprises a first component, a second component and a third component, wherein the first component is a particulate solid with a d₈₀ value of the particle size distribution of ≤ 500 µm, an Al₂O₃ content of ≥ 50 weight-% of dry matter, a metal nitride content of ≥ 0.01 weight-% of dry matter and a content of metallic aluminium of ≤ 5 weight-% of dry matter. The second component is a substance with a melting point of ≤ 200 °C, a boiling point of ≥ 40 °C and a solubility in water at 20 °C of ≤ 5 g/l. The third component is a particulate solid with a d₉₀ value of the particle size distribution of ≤ 20 µm. The particles of the first component are at least partially coated with the second component and the particles of the third component at least partially adhere to the second component.

## Description

The present invention relates to a composition comprising aluminium oxide, a hydrophobic substance and a fine particulate substance, a method for its production and its use as a starting material in a process which employs an aluminium oxide-containing starting material.

Recycled aluminium is known as secondary aluminium. Recycling involves melting the scrap, a process that requires only a small percentage of the energy used to produce aluminium from ore, though a significant part may be lost as dross, an ash-like oxide. The dross can undergo a further process to extract aluminium. In furnaces operating without a protective salt layer a considerable amount of atmospheric nitrogen may be bound as nitride during cooling of the aluminium. The amount may be up to 15% nitride.

High-alumina raw materials with an Al₂O₃ content of 50 to 80 percent are available either as natural raw materials (such as bauxite, sillimanite, kyanite and andalusite) or are synthetically produced by chemical processing of bauxite into pure alumina followed by sintering or melting (as is the case for mullite and spinel). In the interest of conserving natural resources, there is a growing trend towards using secondary raw materials that are recovered from waste materials which occur as by-products of recycling processes.

Aluminium salt slag is generated as a by-product in the production or recycling of aluminium metal. In this process, the surface of the molten metal is covered with a layer of salt (for example a mixture of 70 percent NaCl, 28 percent KCl and 2 percent CaF₂). The purpose of the salt layer is to minimize the oxidation of the metal and to absorb oxidic impurities in the form of a salt slag. The salt slag contains about 20-40 percent salt, 50-65 percent oxides and 5 to 10 percent metallic aluminium. As aluminium during melting in air does not only combine with oxygen but also with nitrogen, a salt slag also contains aluminium nitride in addition to aluminium oxide.

In order to recover the components as completely as possible, the salt slag is subjected to a treatment in which most of the metal can be mechanically recovered after crushing and screening the salt slag. Subsequently, the salt slag is treated with water and the salt is dissolved. After separating the insoluble components, herein referred to as "secondary aluminium oxide product", the salt is crystallized by evaporating the solution and is thus made available again for the aluminium-melting process described above.

The secondary aluminium oxide product contains about 50-80 percent Al₂O₃. According to M. Beckmann (Aluminium 67 [1991] 586-593), the Al₂O₃ is present in the mineralogical form of corundum alpha-Al₂O₃, spinel MgAl₂O₄ and aluminium tri-hydroxide beta-Al₂O₃ · 3 H₂O (bayerite). Aluminium tri-hydroxide is formed in the wet treatment of salt slag by the reaction of water with aluminium or aluminium nitride according to the following equations:

2Al + 6 H₂O → Al₂O₃ · 3 H₂O + 3 H₂

2 AlN + 6 H₂O → Al₂O₃ · 3 H₂O + 2 NH₃

In a practical wet treatment process, the particle size to which the salt slag is crushed and the reaction time are set according to economic criteria with the result that the alumina product can have a residual content of as much as 5 percent aluminium metal and aluminium nitride.

The secondary aluminium oxide product is taken out of the wet treatment process as a sludge filtrate in cake form (in most cases with a water content of about 30-45 percent, not in a suitable form for transporting or for measuring out controlled quantities, and with a strong odour of ammonia. The unfavourable consistency and the residual content of aluminium metal and aluminium nitride are a considerable drawback associated with using the alumina product, particularly for producing sintered or fused materials. In the further processing of the product (mixing with other mineral materials, drying, calcining, sintering, melting) the following difficulties occur, some of which represent major problems:
Exposure of workers to malodorous ammonia vapours during handling;
Strong thermal reaction and release of gas (water vapour, H₂, NH₃) when mixing the product with quicklime and cement, resulting in poor mechanical strength of moulded bodies (for example pellets and briquettes);
Corrosion of equipment caused by release of gas;
Risk of explosion caused by release of gas;
Accumulations attaching themselves and forming mechanical obstructions in the machinery and transport paths;
Difficult to control local temperature variations, specifically overheating of rotary kilns used in sintering processes due to uncontrolled thermal reactions of the aluminium metal and the aluminium nitride, resulting in undesirable melting, baked-on material accumulations and formation of lumps.

Numerous attempts have been made to address these problems. EP 2 105 412 A1 for example discloses high alumina compositions containing (wt%): alumina 50-90; magnesium oxide 1-20; silica 0.5-15; aluminium nitride 0.1-15; ferric oxide 0.1-5; calcium oxide 0.1-7; fluorine 0.1-10; sodium oxide 0.1-6; potassium oxide 0.1-2; aluminium 0.1-10; silicon 0.1-3; iron 0.1-3; loss on ignition 0.1-15 and remaining materials 5 max. The main mineral components are bayerite, boehmite, corundum and spinel. Moisture content is 10 wt% max and 90% of the particles are below 500 µm. The specific surface is more than 50 m²/g and the average pore diameter less than 100 angstroms. An independent claim is included for a method for producing the raw material comprising: (A) dry milling an aluminium salt slag containing 20-60 wt% of NaCl, KCl, CaF₂, 35-75 wt% of Al₂O₃, MgO or SiO₂ and up to 15% of both metallic aluminium and aluminium nitride and, after adding water, mill dot produce a suspension containing 25-55 wt% solids, at least 90 wt% of which has particle size below 500 µm, the average particle being below 50 µm; (B) the suspension is treated in a reactor fitted with a stirrer at a pH of 9-12 and 30-90 °C for 10-60 minutes, producing aluminium hydroxide by reaction of metallic aluminium and aluminium nitride with water, liberating hydrogen and ammonia and forming a salt sol which is made alkaline by the ammonia; (C) filtering the product, washing the filter cake and spraying it with water to remove salts and sucking air through it to adjust its moisture content to 30-50 wt%; and (D) drying the product at 70-110 °C to a residual moisture content of less than 10 wt%.

CN 1069046 concerns a kind of water-proof building powder and its production method. The raw materials of said powder are inorganic solid powder, hydrophobic material, sodium hydroxide and water. Their weight proportion is 100:(2-10):(0.2-0.8):(200-500). The inorganic solid powder is one or more following materials: calcium lime, natural rock mineral powder, light calcium carbonate powder, fine sand, industrial offscum and alumite offscum. The hydrophobic material is colophony or one or more kinds of colophony, stearic acid, and paraffin wax. These raw materials are made into pulp and the water-proof building powder is obtained after passing through the processes of filtering, dewatering, stoving, crushing and sieving.

WO 2015/062819 A1 is directed towards a self-foaming geopolymer composition comprising at least one hydraulic binder; at least one binder selected from latent hydraulic binders, pozzolanic binders, and mixtures thereof; at least one alkaline activator; and aluminium dross. It moreover relates to the use of that geopolymer composition for the production of geopolymer foams and/or foamed geopolymer products.

The present invention has the object of providing a way to use secondary aluminium oxide or other aluminium oxide-containing compositions which additionally contain metal nitrides as a raw material in manufacturing while avoiding the associated drawbacks of the reaction of the compositions with water.

This object has been achieved by a composition according to claim 1, a method of manufacturing such a composition according to claim 13 and a use according to claim 14.

Advantageous embodiments are described in the dependent claims. They may be combined freely unless the context clearly indicates otherwise.

The invention provides a composition comprising a first component, a second component and a third component, wherein:
the first component is a particulate solid with a d₈₀ value of the particle size distribution of ≤ 500 µm, an Al₂O₃ content of ≥ 50 weight-% of dry matter, a metal nitride content of ≥ 0.01 weight-% of dry matter and a content of metallic aluminium of ≤ 5 weight-% of dry matter;
the second component is a substance with a melting point (1013 mbar) of ≤ 200 °C, a boiling point (1013 mbar) of ≥ 40 °C and a solubility in water (1013 mbar) at 20 °C of ≤ 5 g/l;
the third component is a particulate solid with a d₉₀ value of the particle size distribution of ≤ 20 µm;
the particles of the first component are at least partially coated with the second component and the particles of the third component at least partially adhere to the second component.

In the composition according to the invention the particles of the first component are at least partially coated with the second component. Of course it is preferred that the degree of coating is as high as possible, i.e. fully coated particles of the first component are most desirable. Without wishing to be bound by theory it is believed that the second component shields the particles of the first component from moisture, thereby inhibiting the reaction of, for example, aluminium nitride with water to produce ammonia.

The third component provides particles which at least partially adhere to the second component. Hence this arrangement can also be seen as the particles of the third component being adhered to the particles of the first component via the second component. The amount of third component particles may be selected in such a way that individual particles of the first component do not adhere to each other via the second component because they are in turn sufficiently coated with an outer layer of particles of the third component. This improves the flowability of the composition.

Another advantage of the composition according to the invention is that energy intensive drying steps to reduce the moisture content of the first component can be avoided. Due to the second component shielding reactive species from moisture much higher moisture levels can be tolerated in the first component.

The first component is a particulate solid with a d₈₀ value of the particle size distribution of ≤ 500 µm. The particle size distribution may be determined in accordance with the norm DIN EN 933. It is preferred that the d₈₀ value is > 100 µm to ≤ 500 µm, more preferred > 200 µm to ≤ 400 µm.

Furthermore, the Al₂O₃ content of the first component is ≥ 50 weight-% of dry matter. In the context of the present invention the Al₂O₃ content of a component represents a sum parameter from the contents of aluminium oxide and hydroxide species such as amorphous aluminium oxide, corundum, bayerite, boehmite, gibbsite, nordstrandite and spinel. The total content can be determined in an X-ray fluorescence spectroscopy measurement. Dry matter may be obtained by heating the samples to 105 °C until no further weight loss is observed. Preferably this Al₂O₃ content is ≥ 60 to ≤ 80 weight-% of dry matter, more preferred ≥ 65 to ≤ 75 weight-% of dry matter.

The first component also comprises metal nitride such as aluminium nitride and/or silicon nitride, a fact which is expressed by a minimum content for the metal nitrides of ≥ 0.01 weight-% of dry matter. The nitride content can be determined from the nitrogen content according to DIN 51732. Preferably, the nitrogen content is used to calculate a metal nitride content as aluminium nitride. A further example for a metal nitride content is ≥ 0.01 weight-% to ≤ 5 weight-% of dry matter.

The first component may comprise metallic aluminium, however only up to ≤ 5 weight-% of dry matter as most aluminium should have been recovered in preceding treatment steps. The metallic aluminium content may be determined according to DIN EN ISO 11885. Preferably the content is ≥ 0 to ≤ 5 weight-% of dry matter, more preferred ≥ 0 to ≤ 3 weight-% of dry matter.

The second component can be classified as a hydrophobic compound or compound mixture. The hydrophobic properties are expressed as having a solubility in water at 20 °C of ≤ 5 g/l, preferably ≤ 3 g/l and more preferred ≤ 1 g/l. For adequate coating properties, the second component is furthermore selected to have a melting point of ≤ 200 °C (preferably ≥ -120 °C to ≤ 200 °C, more preferred > -100 °C to ≤ 150 °C) and a boing point of ≥ 40 °C (preferably > 40 °C to ≤ 450 °C, more preferred ≥ 50 °C to ≤ 400 °C). In case a melting point or a boiling point cannot be stated because the substance or substance mixture displays a melting temperature range or a boiling temperature range, the mean value of the range is used instead. The determination of physical properties is performed at standard pressure (1013 mbar).

Suitable weight ratios of the second component to the first component include ≥ 1 to ≤ 10 parts by weight of the second component for 100 parts by weight of the first component, preferably > 1.5 to ≤ 7, more preferred ≥ 2 to ≤ 5 parts by weight.

In the composition according to the invention the third component is a particulate solid with a d₉₀ value of the particle size distribution of ≤ 20 µm. The particle size distribution may be determined in accordance with the norm DIN EN 933. It is preferred that the d₉₀ value is ≥ 10 µm to ≤ 20 µm, more preferred ≥ 5 µm to ≤ 15 µm.

Suitable weight ratios of the third component to the first component include > 10 to ≤ 100 parts by weight of the second component for 100 parts by weight of the first component, preferably ≥ 20 to ≤ 80, more preferred > 30 to ≤ 70 parts by weight.

The moisture content of the composition according to the invention is preferably selected to be lower than an upper limit beyond which the composition may display thixotropic properties (flow moisture point) and higher than a lower limit beyond which the dust formation of the composition is not acceptable. A suitable moisture range is ≥ 12 to ≤ 25 weight-%.

In one embodiment of the composition according to the invention the weight ratios of the first component, the second component and the third component are:

| First component (dry matter) | Second component | Third component |
|---|---|---|
| 100 | ≥ 1 to ≤ 10 | ≥ 10 to ≤ 100 |

Preferred weight ratios are:

| First component (dry matter) | Second component | Third component |
|---|---|---|
| 100 | ≥ 1.5 to ≤ 7 | ≥ 20 to ≤ 80 |

More preferred weight ratios are:

| First component (dry matter) | Second component | Third component |
|---|---|---|
| 100 | ≥ 2 to ≤ 5 | ≥ 30 to ≤ 70 |

In another embodiment of the composition according to the invention the first component has the following properties with respect to dry matter, the sum of the weight percentages stated being ≤ 100 weight-%:

| | |
|---|---|
| Al₂O₃ content | ≥ 60 to ≤ 80 weight-% of dry matter |
| SiO₂ content | ≥ 3 to ≤ 10 weight-% of dry matter |
| CaO content | > 1 to ≤ 10 weight-% of dry matter |
| MgO content | ≥ 3 to ≤ 10 weight-% of dry matter |

and/or the moisture content of the first component is ≥ 20 to ≤ 30 weight-%.

The moisture content may be determined by the weight difference before and after heating the samples to 105 °C until no further weight loss is observed. SiO₂ CaO and MgO content may be determined by X-ray fluorescence spectroscopy.

Preferred are:

| | |
|---|---|
| Al₂O₃ content | ≥ 65 to ≤ 75 weight-% of dry matter |
| SiO₂ content | ≥ 4 to ≤ 9 weight-% of dry matter |
| CaO content | ≥ 2 to ≤ 9 weight-% of dry matter |
| MgO content | ≥ 4 to ≤ 9 weight-% of dry matter |

More preferred are:

| | |
|---|---|
| Al₂O₃ content | 67 to ≤ 73 weight-% of dry matter |
| SiO₂ content | ≥ 5 to ≤ 8 weight-% of dry matter |
| CaO content | ≥ 3 to ≤ 8 weight-% of dry matter |
| MgO content | ≥ 5 to ≤ 8 weight-% of dry matter |

In another embodiment of the composition according to the invention the second component is a hydrocarbon, a hydrocarbon mixture, a silicone oil and/or a silicone oil mixture. Preferred hydrocarbon mixtures include diesel oil, paraffin oil and paraffin wax.

In another embodiment of the composition according to the invention the third component has the following properties, the sum of the weight percentages being ≤ 100 weight-%:

| | |
|---|---|
| Moisture content | ≥ 0.5 to ≤ 10 weight-% |
| Al₂O₃ content (dry matter) | ≥ 0 to ≤ 30 weight-% |
| SiO₂ content (dry matter) | ≥ 40 to ≤ 100 weight-% |

Al₂O₃ and SiO₂ content may be determined by X-ray fluorescence spectroscopy followed by calculating the oxidic content from the Al and Si content. Preferred properties are:

| | |
|---|---|
| Moisture content | ≥ 0.8 to ≤ 5 weight-% |
| Al₂O₃ content (dry matter) | ≥ 5 to ≤ 25 weight-% |
| SiO₂ content (dry matter) | ≥ 45 to ≤ 90 weight-% |

More preferred are:

| | |
|---|---|
| Moisture content | ≥ 1 to ≤ 2 weight-% |
| Al₂O₃ content (dry matter) | ≥ 20 to ≤ 25 weight-% |
| SiO₂ content (dry matter) | ≥ 50 to ≤ 80 weight-% |

In another embodiment of the composition according to the invention the first component comprises a water-insoluble residue obtainable by:
- separating aluminium metal from aluminium salt slag, thereby obtaining a metal-depleted salt slag; and
- treating the metal-depleted salt slag with water and separating a liquid phase and a water-insoluble residue obtained thereby.

The water-insoluble residue may be described as a secondary aluminium oxide product. This has the advantage that a substance already certified for numerous applications such as a cement additive is used and regulatory issues are simplified.

In another embodiment of the composition according to the invention the third component comprises fly ash obtained from the combustion of coal and/or perlite dust. Preferably fly ash according to DIN EN 450 is used. This also has the advantage that a substance already certified for numerous applications such as a cement additive is used and regulatory issues are simplified.

In another embodiment of the composition according to the invention the composition has the following properties:

| | |
|---|---|
| Moisture | ≥ 10 to ≤ 20 weight-% |
| Al₂O₃ content (dry matter) | ≥ 40 to ≤ 60 weight-% |
| Chloride content (dry matter) | ≤ 0.5 weight-% |
| Fluoride content (dry matter) | ≤ 0.8 weight-% |
| Alkaline content (dry matter) | ≤ 2 weight-% |

The chloride and fluoride content can be determined according to DIN EN ISO 10304-1. Such low chloride and fluoride contents have the advantage that caking of the composition in machinery parts when the composition is used in the production of cement is reduced or avoided and that gas purification systems in this process are not burdened with fluorine. Alkaline content (as K₂O and Na₂O) can be determined from dried samples via X-ray fluorescence spectroscopy.

Preferably the properties are:

| | |
|---|---|
| Moisture | ≥ 11 to ≤ 18 weight-% |
| Al₂O₃ content (dry matter) | ≥ 42 to ≤ 55 weight-% |
| Chloride content (dry matter) | ≤ 0.4 weight-% |
| Fluoride content (dry matter) | ≤ 0.7 weight-% |
| Alkaline content (dry matter) | ≤ 1.8 weight-% |

In another embodiment of the composition according to the invention the composition has the following properties:

| | |
|---|---|
| Moisture | ≥ 11 to ≤ 15 weight-% |
| Al₂O₃ content (dry matter) | ≥ 45 to ≤ 50 weight-% |
| Chloride content (dry matter) | ≤ 0.3 weight-% |
| Fluoride content (dry matter) | ≤ 0.6 weight-% |
| Alkaline content (dry matter) | ≤ 2 weight-% |

In another embodiment of the composition according to the invention the composition further comprises a zeolite. Examples for zeolites include zeolite beta, zeolite Y (preferred), zeolite omega, ZSM-5, ZSM-12, MCM-22, MCM-36, MCM-49, MCM-56, MCM-58, MCM-68, Faujasite and Mordenite. The zeolite is preferably an acidic zeolite, i.e. a zeolite with a pH (DN EN ISO 10523) of < 7. Particularly preferred are zeolites with a pH (DIN EN ISO 10523) of ≤ 6, even more preferred ≤ 5. Furthermore, it is preferred that the d₈₀ value (DIN EN 933) of the particle size distribution of the zeolite is ≤ 100 µm, more preferred > 1 µm to ≤ 10 µm. The zeolite may contain rare earth elements as dopants, such as La and/or Ce. They may serve to enhance the acidity of the zeolite.

Examples for preferred zeolites include acidic zeolites such as the aluminosilicate zeolites having a relatively high silica and low alumina content with the aluminium sites being acidic. The acidity is believed to be due to substitution of Al³⁺ in place of the tetrahedral Si⁴⁺ in the structure. Preferred silica to alumina molar ratios (SiO₂/Al₂O₃) of the zeolite are ≥ 5 moles (i.e., ≥ 5 SiO₂ per mole Al₂O₃) to ≤ 280 moles SiO₂ per mole Al₂O₃. Within this range, a SiO₂/Al₂O₃ molar ratio of greater than or equal to 30 is preferred, with a SiO₂/Al₂O₃ molar ratio of greater than or equal to 50 being more preferred. Examples of especially suitable acidic zeolites include ZSM-5, zeolite Y, beta zeolite beta and the like, and combinations comprising one or more of the foregoing zeolites.

Adding a zeolite to the composition according to the invention has several advantages. The moisture of the composition can be held below the transport moisture limit (TML). Ammonia dissolved in the interstitial water of the aluminium oxide can be absorbed. Customer specifications for elements such as Cl, F, alkalines (Na₂O, K₂O) and heavy metals can be met and the product specification under regulatory aspects can be retained. Lastly, zeolites are widely available and economically attractive.

Preferably the zeolite is distributed within the first component. This may be achieved by mixing the materials thoroughly. Particularly preferred is an intensive mixing, the energy transfer of which into the composition being beneficial in breaking up aluminium oxide aggregates present after autogenic drying.

It is also preferred that the weight ratio of the first coponent to the zeolite is ≥ 1:1 to ≤ 10000:1. Preferred is a weight ratio of the first component to the zeolite of ≥ 1:1 to ≤ 100:1, more preferred ≥ 1:1 to ≤ 5:1, even more preferred ≥ 1:1 to ≤ 2:1.

The zeolite may preferably be a used or unused fluid catalytic cracking (FCC) catalyst. FCC catalysts are widely available. Even used catalysts which otherwise would be discarded may be used in the present invention. Without wishing to be bound by theory it is believed that hydrocarbon residues present in the used FCC catalyst additionally serve to shield AlN regions in the particles of the aluminium oxide composition from moisture.

The present invention further provides a method of manufacturing a composition according to the invention comprising the steps of:
A) at least partially coating the first component with the second component, the second component being in a liquid form, thereby obtaining a mixture;
B) adding the third component to the mixture obtained in step A) and distributing the third component throughout the mixture;
wherein the first, second and third component are as defined above.

In an embodiment of the method according to the invention the addition of a zeolite as outlined above to the composition is also contemplated.

The second component may be heated prior and during step A) in order to melt the compound and/or to reduce its viscosity.

Another aspect of the present invention is the use of a composition according to the invention as a starting material in a process which employs an aluminium oxide-containing starting material.

In an embodiment of the use according to the invention the process is the production of cement or the production of mineral wool. Examples for cement types are Portland cement and calcium sulfoaluminate cement.

The present invention will be further described with reference to the following examples without being limited by them

### Example 1

A secondary aluminium oxide obtained by recycling aluminium salt slag and fly ash from a coal furnace according to DIN EN 450-1:2012 were mixed with paraffin oil heated to 50 °C (2 weight-% with respect to secondary aluminium oxide including the moisture present) to give a composition according to the invention. The solid starting materials and the obtained composition had the following properties within the stated ranges. Moisture was determined by gravimetry at 105 °C. For the secondary oxide, Al₂O₃ and alkaline content (as K₂O and Na₂O) were determined from dried samples via X-ray fluorescence spectroscopy. For the fly ash metal and metal oxide content was calculated from X-ray florescence spectroscopy measurements. Chloride and fluoride content was determined according to DIN EN ISO 10304-1.

| | Secondary Al₂O₃ | Fly Ash | Invention |
|---|---|---|---|
| Moisture (gravimetric; 105 °C) | 22-25 weight% | 1.0-2.0 weight% | 11-15 weight% |
| Dust formation? | No | Yes | No |
| Detectable NH₃ smell? | Yes | No | No |
| Al₂O₃ content | 65-70 weight% | 20-22 weight% | 45-50 weight% |
| Chloride content | 0.5-0.8 weight% | 0 weight% | < 0.3 weight% |
| Fluoride content | 1.2-1.5 weight% | 0.2 weight% | < 0.6 weight% |
| Alkaline content | 1.0 weight% | 2.5 weight% | 1.5 weight% |

As the olfactory threshold for NH₃ is around 1 ppm it is believed that in the composition according to the invention the reaction of nitrides and water to form ammonia has been greatly suppressed.

### Example 2

A composition according to the invention was analysed in accordance with procedures outlined in example 1. The results are given in the following table:

| | |
|---|---|
| Loss on ignition | 8.82 weight-% |
| SiO₂ | 24.96 weight-% |
| Al₂O₃ | 46.02 weight-% |
| TiO₂ | 0.80 weight-% |
| MnO | 0.14 weight-% |
| Fe₂O₃ | 9.17 weight-% |
| CaO | 3.01 weight-% |
| MgO | 5.78 weight-% |
| K₂O | 1.05 weight-% |
| Na₂O | 0.89 weight-% |
| SO₃ | 0.00 weight-% |
| P₂O₅ | 0.25 weight-% |

### Example 3

This example demonstrates the beneficial effect of adding zeolites to aluminium oxides. As a zeolite a used fluid catalytic cracking catalyst was used. This was a zeolite Y with a pH (DIN EN ISO 10523) of 4.1 and a chemical composition according to the following analysis:

| | | | |
|---|---|---|---|
| SiO₂ | 39.50% | Na₂O | 0.50% |
| CaO | 0.40% | K₂O | 0.10% |
| MgO | 0.40% | C free | 0.15% |
| Al₂O₃ | 41.90% | CO₂ | 0.20% |
| TiO₂ | 0.80% | C total | 0.20% |
| Fe₂O₃ | 0.90% | S total | 0.95% |
| MnO₂ | 0.01% | H₂O 105 °C | 3.33% |
| P₂O₅ | 1.10% | H₂O 950 °C | 6.92% |

The particle size distribution according to a sieve analysis was:

| | |
|---|---|
| "smaller" | 32.60% |
| > 32 µm | 67.40% |
| > 45 µm | 50.70% |
| > 63 µm | 34.00% |
| > 90 µm | 16.50% |
| > 125 µm | 4.70% |
| > 250 µm | 0.00% |
| Sum of sieve fractions | 100.0% |

The aluminium oxide composition, obtained by recycling aluminium salt slag, had a pH (DIN EN ISO 10523) of 9.7 composition according to the following specification in its data sheet (dry material):

| | Min. | Max. |
|---|---|---|
| Al₂O₃ | 58.00% | 76.00% |
| SiO₂ | 2.00% | 14.00% |
| CaO | 1.30% | 3.80% |
| MgO | 6.50% | 10.20% |
| Fe₂O₃ | 0.90% | 2.80% |
| TiO₂ | 0.50% | 1.00% |
| K₂O | 0.40% | 1.20% |
| Na₂O | 0.40% | 1.20% |

The zeolite and the aluminium oxide composition were mixed in a weight ratio of zeolite : aluminium oxide composition of 2 : 1. The resulting mixture had a pH (DIN EN ISO 10523) of 8.2 and a composition according to the following analysis:

| | | | |
|---|---|---|---|
| Moisture at 105 °C | % | 13.85 | |
| Ammonia (calc.) | ppm | 1791.50 | |
| Ammonium (IC) | ppm | 1691.40 | |
| N (CHN-Analyser) | % | n.d. | |
| TOC (RC612) | % | 0.67 | |
| Chloride (potentiometry) | % | 0.31 | |
| Fluoride (Seel) | % | 0.78 | |
| Sulphur (CS-Analyser) | % | 0.30 | |
| BET | m²/g | 38.07 | |
| Blaine | cm²/g | 11750.00 | |
| Density | g/cm³ | 2.80 | |
| | | | Without L.o.I. |
| L.o.I. 1050 °C | % | 15.56 | |
| SiO₂ | % | 17.85 | 21.33 |
| Al₂O₃ | % | 53.86 | 64.35 |
| TiO₂ | % | 0.74 | 0.88 |
| MnO | % | 0.10 | 0.12 |
| Fe₂O₃ | % | 3.04 | 3.63 |
| CaO | % | 1.25 | 1.49 |
| MgO | % | 5.28 | 6.31 |
| K₂O | % | 0.43 | 0.51 |
| Na₂O | % | 0.71 | 0.85 |
| SO3 | % | 0.00 | 0.00 |
| P₂O₅ | % | 0.44 | 0.53 |
| Sum RFA (1050 °C) | % | 99.26 | 100 |

The following observations were made with respect to this mixture:
- Ammonia production ceased within 10 seconds of mixing, as determined by olfactory analysis
- Exothermic reactions ceased immediately after mixing
- Immediately after mixing, ammonia could be stripped out of the mixture by raising the pH; after 2 weeks of storing the mixture this was significantly decreased (at least by 90%)
- Aqueous extraction of a mixture which had been stored for over 2 weeks followed by evaporating the water did not lead to detectable ammonia emissions
- Raising the pH to > 12 by adding lime did not lead to ammonia emission from a mixture stored for a considerable amount of time
- Even after storing a mixture with ca. 15-20% moisture for 6 months no ammonia emissions could be detected

All of the experiments above would have led to ammonia emissions of over 1000 ppm in the original aluminium oxide composition.

## Claims

1. A composition comprising a first component, a second component and a third component,
**characterized in that**
the first component is a particulate solid with a d₈₀ value of the particle size distribution of ≤ 500 µm, an Al₂O₃ content of ≥ 50 weight-% of dry matter, a metal nitride content of ≥ 0.01 weight-% of dry matter and a content of metallic aluminium of ≤ 5 weight-% of dry matter;
the second component is a substance with a melting point of ≤ 200 °C, a boiling point of ≥ 40 °C and a solubility in water at 20 °C of ≤ 5 g/l;
the third component is a particulate solid with a d₉₀ value of the particle size distribution of ≤ 20 µm; the particles of the first component are at least partially coated with the second component and
the particles of the third component at least partially adhere to the second component.

2. The composition according to claim 1, wherein the weight ratios of the first component, the second component and the third component are:
| First component (dry matter) | Second component | Third component |
|---|---|---|
| 100 | ≥ 1 to ≤ 10 | ≥ 10 to ≤ 100 |

3. The composition according to claim 1 or 2, wherein the first component has the following properties with respect to dry matter, the sum of the weight percentages stated being ≤ 100 weight-%:
| | |
|---|---|
| Al₂O₃ content | ≥ 60 to ≤ 80 weight-% of dry matter |
| SiO₂ content | ≥ 3 to ≤ 10 weight-% of dry matter |
| CaO content | ≥ 1 to ≤ 10 weight-% of dry matter |
| MgO content | ≥ 3 to ≤ 10 weight-% of dry matter |
and/or wherein the moisture content of the first component is ≥ 20 to ≤ 30 weight-%.

4. The composition according to one of claims 1 to 3, wherein the second component is a hydrocarbon, a hydrocarbon mixture, a silicone oil and/or a silicone oil mixture.

5. The composition according to one claims 1 to 4, wherein the third component has the following properties, the sum of the weight percentages being ≤ 100 weight-%:
| | |
|---|---|
| Moisture content | ≥ 0.5 to ≤ 10 weight-% |
| Al₂O₃ content (dry matter) | ≥ 0 to ≤ 30 weight-% |
| SiO₂ content (dry matter) | ≥ 40 to ≤ 100 weight-% |

6. The composition according to one of claims 1 to 5, wherein the first component comprises a water-insoluble residue obtainable by:
- separating aluminium metal from aluminium salt slag, thereby obtaining a metal-depleted salt slag; and
- treating the metal-depleted salt slag with water and separating a liquid phase and a water-insoluble residue obtained thereby.

7. The composition according to one of claims 1 to 6, wherein the third component comprises fly ash obtained from the combustion of coal and/or perlite dust.

8. The composition according to one of claims 1 to 7, wherein the composition has the following properties:
| | |
|---|---|
| Moisture | ≥ 10 to ≤ 20 weight-% |
| Al₂O₃ content (dry matter) | ≥ 40 to ≤ 60 weight-% |
| Chloride content (dry matter) | ≤ 0.5 weight-% |
| Fluoride content (dry matter) | ≤ 0.8 weight-% |
| Alkaline content (dry matter) | ≤ 2 weight-% |

9. The composition according to one of claims 1 to 7, wherein the composition further comprises a zeolite.

10. The composition according to claim 9, wherein the zeolite is distributed within the first component.

11. The composition according to claim 9 or 10, wherein the weight ratio of the first coponent to the zeolite is ≥ 1:1 to ≤ 10000:1.

12. The composition according to one of claims 9 to 11, wherein the zeolite is a used or unused fluid catalytic cracking catalyst.

13. A method of manufacturing a composition according to one of claims 1 to 12 comprising the steps of:
A) at least partially coating the first component with the second component, the second component being in a liquid form, thereby obtaining a mixture;
B) adding the third component to the mixture obtained in step A) and distributing the third component throughout the mixture;
wherein the first, second and third component are as defined in one of claims 1 to 12.

14. Use of a composition according to one of claims 1 to 8 as a starting material in a process which employs an aluminium oxide-containing starting material or as an additive for concrete.

15. The use according to claim 10, wherein the process is the production of cement or the production of mineral wool.
